# EUROPEAN PATENT APPLICATION

(11) **EP 0 997 897 A2**
(43) Date of publication of application: **03.05.2000**
(21) Application number: 99115477.4
(22) Date of filing: 05.08.1999
(51) Int. Cl.: G11B 17/04

(54) **Passive slot-loader for an optical disc drive**

(30) Priority: 27.10.1998 US 179266
(71) Applicant: Hewlett-Packard Company, Palo Alto, California 94304 (US)
(72) Inventor: Hunter, Charles L., Loveland, CO 80538 (US)
(74) Representative: Schoppe, Fritz, Dipl.-Ing.

(57) **Abstract**

A disc drive mechanism has a transport mechanism for transporting a disc through a slot in the front face (102) of the drive without requiring motors or any other powered parts. Two pivoting arms (108, 110) have over-center springs (500). When a disc is inserted, as soon as the disc displaces the arms past their respective neutral points, the arms are driven away from the front of the drive by the over-center springs, carrying the disc completely into the drive. The two arms swing completely out of the way and the disc is dropped onto a motor spindle (106). The arms also have a cam surface (600) that raises or lowers a magnetic clamping plate (410). For ejection of the disc, in one example embodiment, an eject button (708) on the front face of the drive is linked to each over-center spring, so that pressing the button places a force on the springs that causes the springs to rotate the arms toward the front of the drive, causing the arms to rotate past the neutral position. In an alternative embodiment of the eject mechanism, an eject button (710) on the front face of the drive is linked directly to the arms, so that pressing the button rotates the arms toward the front of the drive. The transport mechanism also includes front guides (116, 118), between the arms and the front face of the drive. The front guides are spring loaded for deflection, and they may deflect linearly or they may rotate.

## Description

### FIELD OF INVENTION

This invention relates generally to drive mechanisms for compact discs (CD) and digital-versatile-discs (DVD) and other similar discs and more specifically to a mechanism for transporting a disc between an input slot and a motor spindle.

### BACKGROUND OF THE INVENTION

Some optical disc drives accept a circular disc that is not enclosed in a separate container or cartridge. Examples include drives for CD and DVD media. CD and DVD discs have a central hole that is placed onto a motor spindle in the drive for radial alignment. The area immediately surrounding the central hole is typically clamped to provide a rotation force and to maintain alignment in a direction perpendicular to the surface of the disc. There are at least three common ways of inserting a disc into a drive and positioning the disc onto the spindle. For some drives, the top of the drive may be opened to expose the spindle, and a disc is manually placed onto the spindle. For most drives, however, only the front face of the drive is accessible, so the disc must be inserted through the front. In some drives, a drawer extends from the front of the drive to accept a disc. In other drives, a disc is simply inserted into a slot in the front face of the drive, and at some point during the insertion the drive grips the disc and transports the disc for the remaining motion. The invention is primarily related to drives in which a disc is inserted into a slot in the front face of the drive.

Slot mechanisms typically require relatively complex mechanisms. A mechanism must pick up the disc, position it on the motor spindle, and subsequently clamp the disc. For ejection, the clamp must be removed, the disc must be removed from the spindle, and the disc must be partially ejected out of the drive so that an operator can grasp the disc and complete-the removal. Slot mechanisms typically use motors and gear or belt assemblies. In addition, most slot mechanisms have numerous parts to accomplish all the required functions. There is a need for a simple passive mechanism for loading and unloading a disc through a slot.

### SUMMARY OF THE INVENTION

A drive mechanism in accordance with the invention has a transport mechanism for transporting a disc through a slot in the front face of the drive without requiring motors or any other powered parts. Two pivoting arms have over-center springs so that when an arm is rotated toward the front of the drive, past a neutral position, the spring force is in a direction to rotate the arm toward the front of the drive, and when the arm is rotated away from the front of the drive, past the neutral position, the spring force is in a direction to rotate the arm away from the front of the drive. When a disc is inserted, as soon as the disc displaces the arms past their respective neutral points, the arms are driven away from the front of the drive by the over-center springs, carrying the disc completely into the drive. The two arms swing completely out of the way and the disc is dropped onto a motor spindle. The arms also have a cam surface that raises or lowers a magnetic clamping plate. When the arms swing out of the way of the disc, they lower the magnetic clamping plate, which in turn clamps the disc to the motor assembly for rotation. When the arms are subsequently rotated toward the front of the drive for ejection, the arms lift the magnetic clamping plate, releasing the disc. In addition, the arms have a ramped surface so that when the arms rotate toward the front of the drive for ejection, the disc is lifted onto the ramped surfaces. For ejection of the disc, in one example embodiment, an eject button on the front face of the drive is linked to each over-center spring, so that pressing the button places a force on the springs that causes the springs to rotate the arms toward the front of the drive, causing the arms to rotate past the neutral position. In an alternative embodiment of the eject mechanism, an eject button on the front face of the drive is linked directly to the arms, so that pressing the button rotates the arms toward the front of the drive. The transport mechanism also includes front guides, between the arms and the front face of the drive. The front guides are spring loaded for deflection, and they may deflect linearly or they may rotate.

The resulting transport mechanism is completely passive, with relatively few parts and relatively low complexity, thereby providing low cost, low weight, ease of manufacturing, and high reliability.

### BRIEF DESCRIPTION OF THE DRAWINGS

Figure 1 is a simplified top view of a disc drive including an example embodiment of a disc transport mechanism in accordance with the invention.
Figure 2 shows the disc drive of figure 1, illustrating the position of components after a disc has been carried completely into the drive.
Figure 3 shows the disc drive of figure 1, illustrating the position of components when the disc is in a play position.
Figure 4A is a simplified top view of one arm showing details of a cam surface for a clamping plate.
Figure 4B is a simplified top view of the disc drive, showing the clamping plate.
Figure 5A is a simplified top view of one rotating arm, illustrating the over-center spring arrangement, with the arm rotated fully toward the front of the drive.
Figure 5B shows the arm of figure 4A with the arm in the neutral position.
Figure 5C shows the arm of figure 4A with the arm rotated fully away from the front of the drive.
Figure 6 is a side view of and end of one arm or guide showing a ramp surface for raising and lowering the disc.
Figure 7A is a simplified top view of one rotating arm, illustrating additional detail related to two example alternatives for eject mechanisms.
Figure 7B is a simplified top view of the disc drive of figure 1, illustrating one example embodiment of an eject mechanism.
Figure 7C is a simplified top view of the disc drive of figure 1, illustrating a second example embodiment of an eject mechanism.

### DETAILED DESCRIPTION OF THE PREFERRED EMBODIMENT OF THE INVENTION

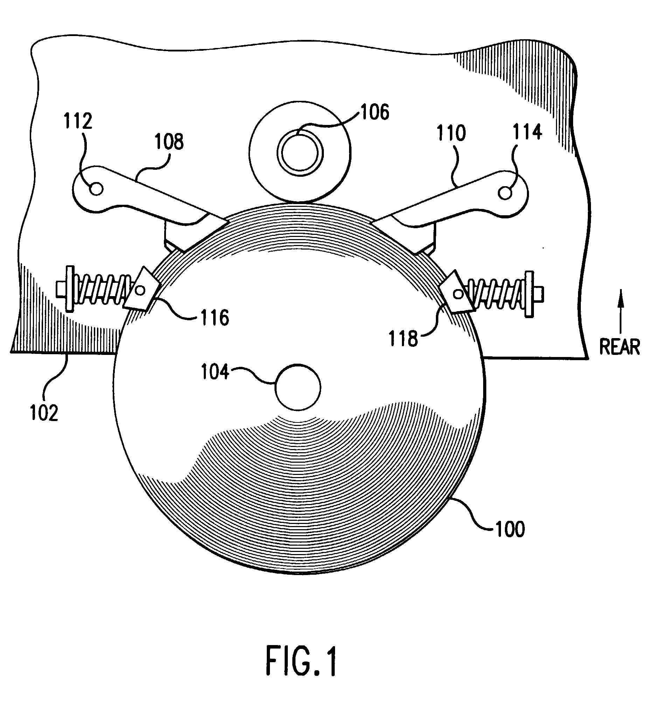

In figure 1, a disc 100 is being inserted through the front face 102 of a drive. Disc 100 has a central hole 104, which for operation is placed onto a motor spindle 106 and is clamped into place. As the disc is inserted, it is received by two rotating arms (108, 110). The arms rotate around pivot points (112, 114). The disc is also received by two guides (116, 118). The guides in figure 1 are depicted as having swivel heads and are depicted as being spring loaded, with linear displacement, with displacement springs approximately parallel to the front face of the drive. Alternatively, The guides may rotate around pivot points, and in particular may rotate around the same pivot points as the arms (pivot points 112 and 114). The arms 108 and 110 are spring loaded by over-center springs. The springs are discussed in more detail in conjunction with figures 5A-5C. For the position of arms 108 and 110 illustrated in figure 1, the springs provide a force in a direction to rotate the arms 108 and 110 toward the front face 102. That is, the springs resist insertion of the disc further into the drive.

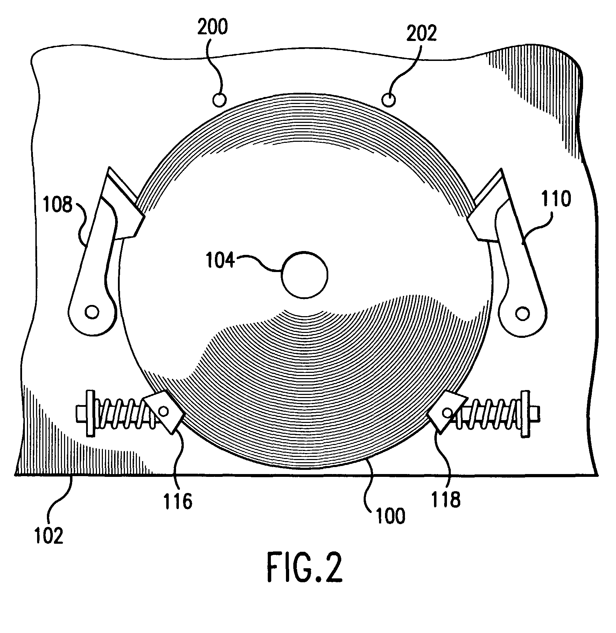

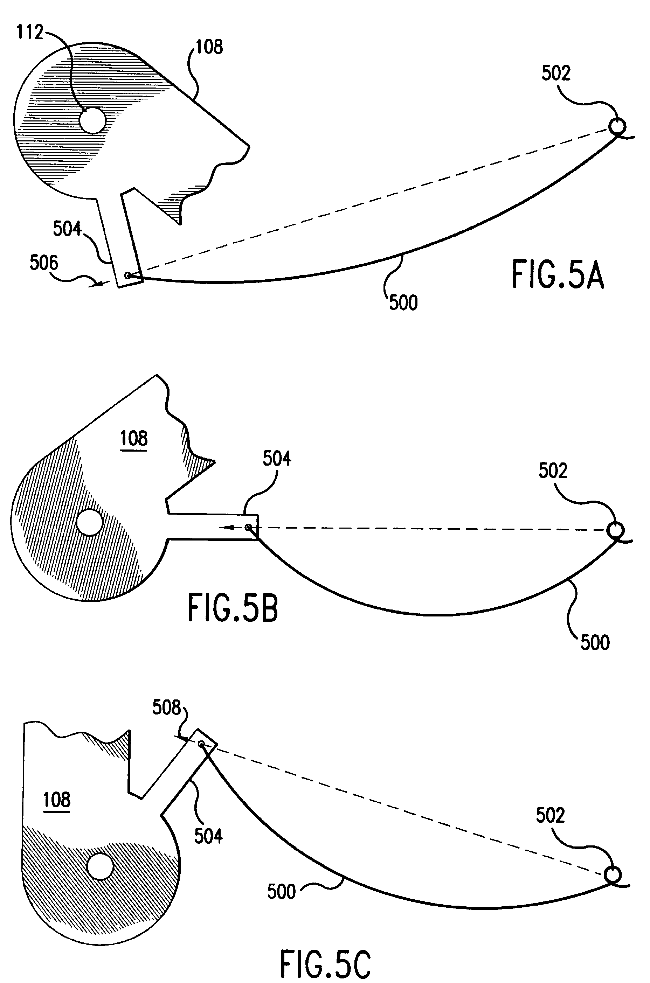

As the disc is inserted further into the drive, the over-center springs on the arms 108 and 110 reach a neutral point, where the springs do not provide any rotational force on the arms 108 and 110. Then, when the disc is inserted still further, the springs provide a force in the opposite direction, swinging the arms 108 and 110 away from the front face 102. As the arms 108 and 110 swing away from the front face 102, they carry the disc 100 completely into the drive. This is illustrated in figure 2, where the disc 100 has been carried into the drive and is still supported by the arms 108 and 110. In the position illustrated in figure 2, the disc is still slightly toward the front of the drive relative to the motor spindle (figure 1, 106). Note also that when the widest part of the disc is inserted past guides 116 and 118, then the spring loaded guides 116 and 118 provide additional force, helping to push the disc 100 further into the drive, and holding the disc against the arms 108 and 110 as they swing inward. Figure 2 also illustrates two stops 200 and 202. As the guides push the disc inward, and as the arms carry the disc inward, the disc is provided with sufficient momentum to hit the two stops 200 and 202. Both the guides and the arms have a ramped lower surface (shown in figure 5). The motor spindle (figure 1, 106) has a tapered top. As the arms are swinging out of the way, the disc slides down the ramped lower surfaces of the guides and the arms. When the disc reaches stops 200 and 202, the disc is no longer supported by the guides, and the arms 108 and 110 continue to rotate away from the front face of the drive. With the disc against the stops 200 and 202, as the arms continue to rotate, the disc slides down the ramped lower surfaces of the arms, and the tapered top of the spindle centers the hole 104.

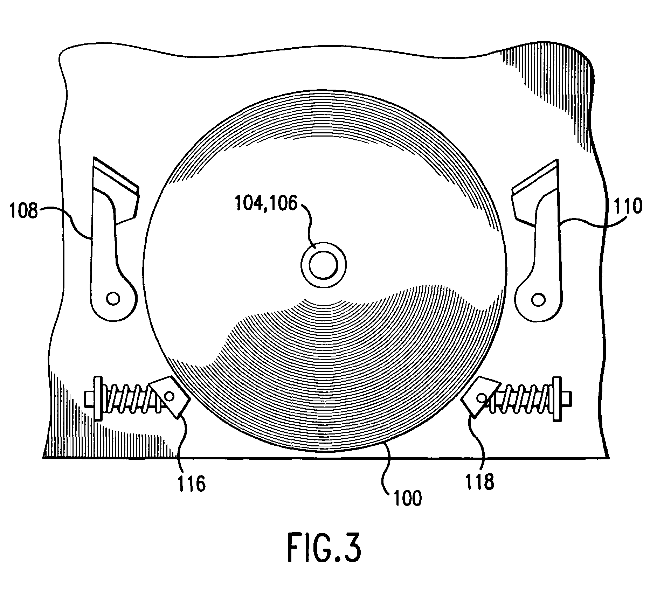

In figure 3, the disc is fully inserted into the drive and the motor spindle 106 passes through the center hole 104 of the disc. In figure 3, the disc has cleared the guides 116 and 118. In addition, the arms 108 and 110 have rotated beyond the disc so that they do not interfere with rotation.

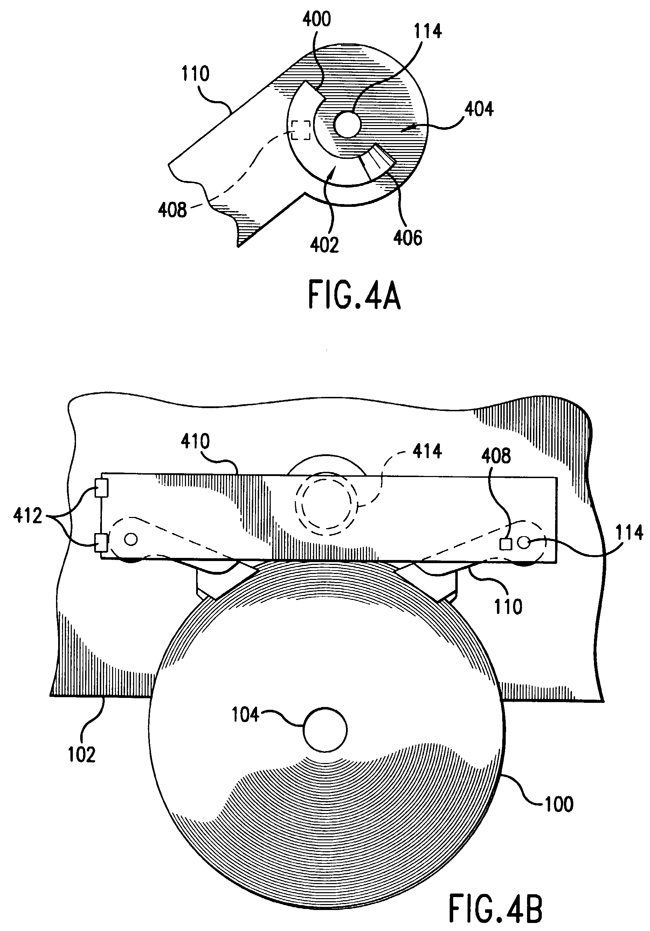

When the disc is fully inserted into the drive as illustrated in figure 3, action of at least one of the arms lowers a clamping bar that has an attached rotating magnet. When the magnet is lowered, it clamps the disc to the motor assembly for rotation. Figure 4A illustrates arm 110 in the same rotation position as in figure 1. In figure 4A, the arm includes cam surface 400, which in turn has a surface 402 that is raised relative to the top surface 404 of the arm. A ramp area 406 provides a transition between the raised area 402 and lower area 404. A clamping bar (shown in figure 4B) has a surface that rides on the cam surface 402, as indicated by area 408 in figure 4A.

Figure 4B shows both arms with the clamping bar 410 mounted above the arms. Clamping bar 410 is hinged for pivotal movement by hinges 412. Surface 408 extends below the bar 410 and rides on the cam surface 402 of arm 110. As arm 110 rotates away from the front face 102 of the drive, to the rotational position indicated by figure 3, surface 408 on the clamping plate slides down the ramp area 406 and onto surface 404. This is sufficient to lower a clamping magnet 414 onto the disc, clamping the disc to the motor assembly. During ejection, as arm 110 rotates toward the front face of the drive, ramp area 406 lifts the clamping arm, breaking the magnetic clamping force, and freeing the disc for ejection.

Figures 5A-5C illustrate the action of the over-center spring on the arms. In figure 5A, a wire spring 500 is wrapped around a post 502, and attaches to an extension 504 of arm 108. For simplicity of illustration, extension 504 is not shown in figures 1-3. In figure 5A, arm 108 is in the rotational position illustrated in figure 1. With the relative positions of the pivot point 112 of the arm, the extension 504, and the post 502 illustrated in figure 5A, the spring provides a force on the extension 504 as depicted by arrow 506. As a result, the spring provides a force to rotate arm 108 clockwise (as seen in figure 5A) towards the front face of the drive. In figure 5B, the arm 108 is at a neutral rotational position where the spring 504 does not provide any rotational force. In figure 5C, the arm 108 has been rotated away from the front face (counterclockwise) beyond the neutral position, so that the spring 500 provides a force on extension 504 as depicted by arrow 508. As a result, in figure 5C the spring provides a force to rotate arm 108 counterclockwise, away from the front face of the drive. In figures 5A - 5C, spring 500 is depicted as a wire spring, but for purposes of the invention the spring could be a compressed coil spring, a leaf spring, or any other over-center spring design as is well known in the mechanical arts.

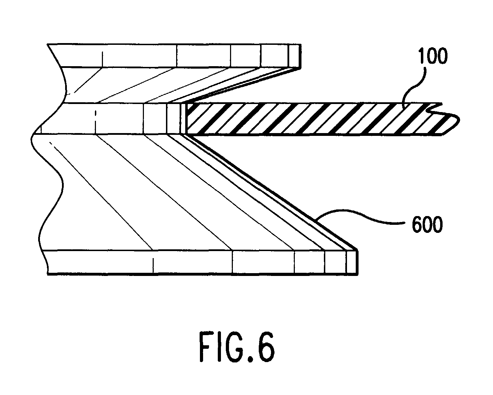

Figure 6 is a side view of the end of an arm (108 or 110) or a guide (116, 118). Each arm and guide has a ramped lower surface 600 suitable for lifting the disc. When the disc is clamped onto the motor spindle, the bottom surface of the disc is above the bottom of the ramped lower surface on the arms and guides. During ejection, as the arms rotate toward the front face of the drive, the ramped lower surface on the arms lift the disc off the motor spindle. As the disc is driven by the arms toward the front face of the drive, the disc is again captured by the ramped lower surface on the guides.

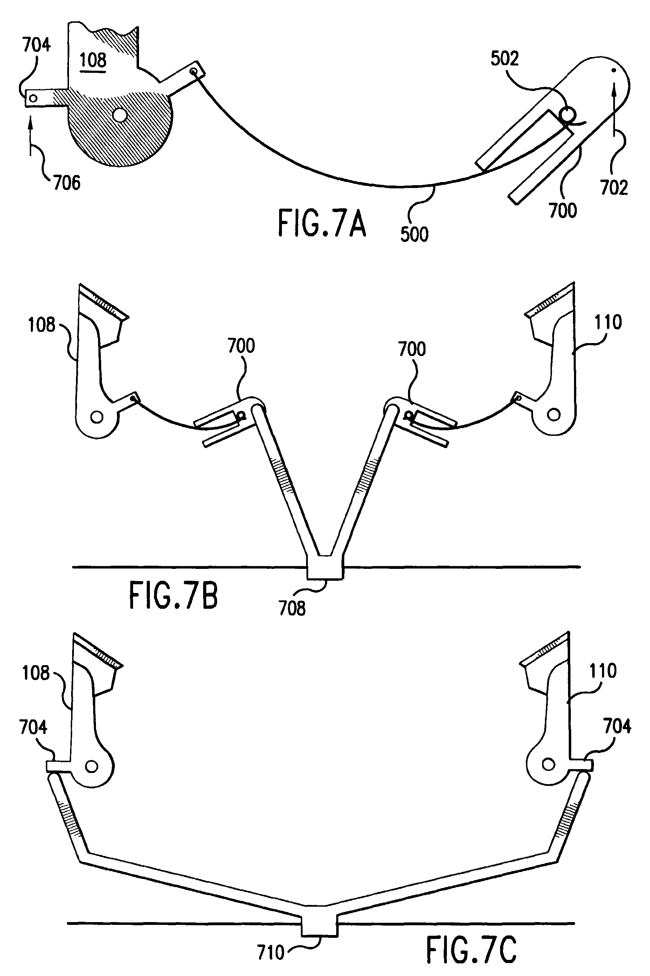

Figures 7A - 7C illustrate two alternative embodiments of a passive eject mechanism in accordance with the invention. In figure 7A, a spring guide 700 rotates around the mounting post 502 for the spring 500. In figure 7A, arm 108 is in the same rotational position as in figures 3 and 5C. If a force is applied to the spring guide 700, as depicted by arrow 702, the spring guide 700 deflects the spring 500 pulling the arm 108 clockwise. With sufficient rotation, the arm 108 rotates beyond the neutral position so that the spring 500 provides a force for clockwise rotation independent of the spring guide 700. As an alternative design for ejection, in figure 7A, arm 108 has an additional extension 704, so that a sufficient force applied to extension 704, as depicted by arrow 706, will rotate arm 108 clockwise, against the force of the spring 500. Again, when the arm 108 has rotated clockwise beyond the neutral position, spring 500 will provide a force to continue the clockwise motion.

In figure 7B, an eject mechanism uses spring guides 700 as illustrated in figure 7A. A push button 708 has a linkage to provide force on each of the spring guides to cause each of the arms to rotate toward the front face of the drive.

In figure 7C, an eject mechanism uses arm extensions 704 as illustrated in figure 7A. A push button 710 has a linkage to provide force on each of the arms to cause the arms to rotate toward the front face of the drive.

The foregoing description of the present invention has been presented for purposes of illustration and description. It is not intended to be exhaustive or to limit the invention to the precise form disclosed, and other modifications and variations may be possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. A transport mechanism for a disc drive, the disc drive having a front face (102):
first and second arms (108, 110), each arm rotating about a pivot point (112, 114), each arm spring loaded by an over-center spring (500) so that when the arm is rotated toward the front face, beyond a neutral position, the spring provides a rotational force towards the front face, and when the arm is rotated away from the front face, beyond the neutral position, the spring provides a rotational force away from the front face; and
when a disc (100) is inserted through the front face, the disc contacts the first and second arms, displacing the arms away from the front face, such that when the arms are displaced past their respective neutral positions, the arms swing away from the front face and transport the disc into the drive.

2. The transport mechanism of claim 1, further comprising:
first and second guides (116, 118), each guide spring loaded, such that when a disc is inserted through the front face the disc is supported by the guides, and when a widest part of the disc passes beyond the guides the guides provide a force on the disc away from the front face and into the drive.

3. The transport mechanism of claim 2, the first and second guides moving linearly.

4. The transport mechanism of claim 2, the first and second guides each rotating around a pivot point.

5. The transport mechanism of claim 1, at least one arm also holding a clamping plate (410) away from a disc during insertion, but releasing the clamping plate when the arm rotates sufficiently far from the front face.

6. The transport mechanism of claim 1, further comprising an eject mechanism.

7. The transport mechanism of claim 6, the eject mechanism further comprising an eject button (708), the eject button linked to the over-center springs of the first and second arms, such that when the arms are rotated away from the front face and beyond their respective neutral positions, actuating the eject button forces each of the over-center springs to switch states so that the springs provide a force to rotate the first and second arms toward the front face.

8. The transport mechanism of claim 7, at least one arm moving a clamping plate away from an inserted disc as the arm rotates toward the front face.

9. The transport mechanism of claim 6, the eject mechanism further comprising an eject button (710), the eject button having a linkage, such that when the first and second arms are rotated away from the front face and beyond their respective neutral positions, actuating the eject button forces each of the first and second arms to rotate towards the front face and beyond their respective neutral positions so that the over-center springs provide a force to rotate the first and second arms toward the front face.

10. The transport mechanism of claim 9, at least one arm moving a clamping plate away from an inserted disc as the arm rotates toward the front face.
